**Europäisches Patentamt**

**European Patent Office**

**Office européen des brevets**

(19)

(11) Veröffentlichungsnummer: **0 253 218**
**A2**

(12) # EUROPÄISCHE PATENTANMELDUNG

(21) Anmeldenummer: **87109519.6**

(22) Anmeldetag: **02.07.87**

(51) Int. Cl.⁴: **H04N 9/64**

(30) Priorität: **08.07.86 DE 3622878**

(43) Veröffentlichungstag der Anmeldung:
**20.01.88 Patentblatt 88/03**

(84) Benannte Vertragsstaaten:
**AT BE CH DE ES FR GB GR IT LI LU NL SE**

(71) Anmelder: **TELEFUNKEN Fernseh und
Rundfunk GmbH
Göttinger Chaussee 76
D-3000 Hannover 91(DE)**

(72) Erfinder: **Dickopp, Gerhard, Prof. Dr.-Ing.
Zu den Tannen 19
D-4150 Krefeld(DE)**
Erfinder: **Bruck, Guido, Dipl.-Ing.
Formerstrasse 24
D-4030 Ratingen 1(DE)**

(74) Vertreter: **Einsel, Robert, Dipl.-Ing.
TELEFUNKEN Fernseh und Rundfunk GmbH
Patent- und Lizenzabteilung Göttinger
Chaussee 76
D-3000 Hannover 91(DE)**

(54) **Farbfernsehübertragungssystem.**

(57) Bei einem Farbfernsehübertragungssystem werden erfindungsgemäß Chrominanzdifferenzsignale (R-Y, B-Y) auf der Übertragungsseite vor einer Gammavorverzerrung tiefpaßgefiltert. Dadurch werden Luminanzdefekte aufgrund von Luminanzinformationen in den Chrominanzkanälen vermieden.

Fig.2

**EP 0 253 218 A2**

## Farbfernsehübertragungssystem

Die Erfindung betrifft ein Farbfernsehübertragungssystem gemäß dem Oberbegriff des Patentanspruchs 1.

Bei herkömmlichen Farbfernsehübertragungssystemen wird das auf-zunehmende Bild in der Kamera übersetzt in die drei Farbsignale R, G und B. Nach der Gammavorverzerrung werden die so entstandenen Farbwertsignale $E_R$, $E_G$ und $E_B$ codiert zu dem Luminanzsignal $E_Y$ sowie zu den Chrominanzsignalen $E^*_U$ und $E^*_V$, wobei $E_U$ und $E^*_V$ tiefpaßgefiltert werden. Unter der Annahme, daß keine Kanalstörungen vorliegen, treten am Empfänger wieder das Luminanzsignal $E_Y$ und die tiefpaßgefilterten Chrominanzsignale $E^*_U$ und $E^*_V$ auf. Diese werden decodiert zu Farbwertsignalen $E'_R$, $E'_G$ und $E'_B$ und der Farbfernsehwiedergaberöhre zugeführt.

Dort erzeugen sie die Farbwerte R', G' und B' mit der zugehörigen Luminanz Y. An den Chrominanzübergängen treten in diesem System aufgrund der Gammavorverzerrung Luminanzdeffekte auf, da in den Chrominanzkanälen auch Luminanzinformtionen übertragen werden.

Aufgabe der Erfindung ist es, ein Farbfernsehübertragungssytem anzugeben, das solche Luminanzdefekte vermeidet.

Die Aufgabe wird durch die im Kennzeichen des Patentanspruchs 1 angegebenen Maßnahmen gelöst. Vorteilhafte Weiterbildungen der Erfindung sind in den Unteransprüchen beschrieben.

Liegen dem Übertragungssystem die gammavorverzerrten Signale $E_Y$, $E_U$ und $E_V$ vor, werden diese zunächst in die Farbsignale, R, G und B umgewandelt. Liegen die Farbsignale R, G, B wie z.B. in einer Kamera schon vor, so erübrigt sich dieser Vorgang. Aus den Signalen R, G und B, die noch in normierter Form mit den entsprechenden Farbwerten gleich sind, wird die Luminanz Y gewonnen. Zur Bildung der Chrominanzdifferenzsignale R-Y und B-Y wird die Luminanz Y von den Farbsignalen R und B abgezogen. Nach erfolgter Tiefpaßfilterung werden die Chrominanzdifferenzsignale R-Y und B-Y wieder mit der Luminanz Y addiert, um die Farbsignale B' und R' zu erhalten. Aus der Luminanz Y sowie den Farbsignalen B' und R' wird nun das Signal G' bestimmt. Aus den so gewonnenen drei Größen B', R' und G' werden auf herkömmliche Weise die Chrominanzsignale $E_Y$, $E'_U$ und $E'_V$ gebildet.

Bei dem erfindungsgemäßen System erfolgt keine Tiefpaßfilterung von Luminanzanteilen wie bei herkömmlichen Standardsystemen. Daher steht die volle Luminanzbandbreite für die Wiedergabe zur Verfügung, nur die Chrominanz ist bandbegrenzt.

Zum besseren Verständnis der Erfindung wird nachfolgend die Erfindung anhand der Zeichnung näher erläutert. Darin zeigen:

Fig. 1 ein herkömmliches Farbfernsehübertragungssystem,

Fig. 2 das erfingunsgemäße Farbfernsehübertragungssystem.

Eine Kamera 1 erzeugt die Farbsignale R, G und B. Nach der Gammavorverzerrung in den Stufen 2 werden die daraus entstandenen Farbwertsignale $E_R$, $E_G$ und $E_B$ einem Coder 3 zugeführt. Am Ausgang des Coders 3 liegen das Luminanzsignal $E_Y$ und die Chrominanzsignale $E^*_U$ und $E^*_V$ an. Die Chrominanzsignale $E^*_U$ und $E^*_V$ werden je einem Tiefpaßfilter 4 und 5 zugeführt, an deren Ausgängen die Chrominanzsignale $E''_U$ und $E''_V$ anliegen. Unter der Voraussetzung, daß keine Kanalstörungen vorliegen, liegen diese Signale $E_Y$, $E''_U$ und $E''_V$ am Empfänger an. Sie werden einem Decoder 6 zugeführt, der die Farbwertsignale $E'_R$, $E'_G$ und $E'_B$ erzeugt. Diese Signale $E'_R$, $E'_G$ und $E'_B$ werden der Farbbildröhre zugeführt, die das aufgezeichnete Bild der Kamera 1 wiedergibt, jedoch mit Luminanzdefekten, da in den Chrominanzkanälen auch Luminanzinformation übertragen wird.

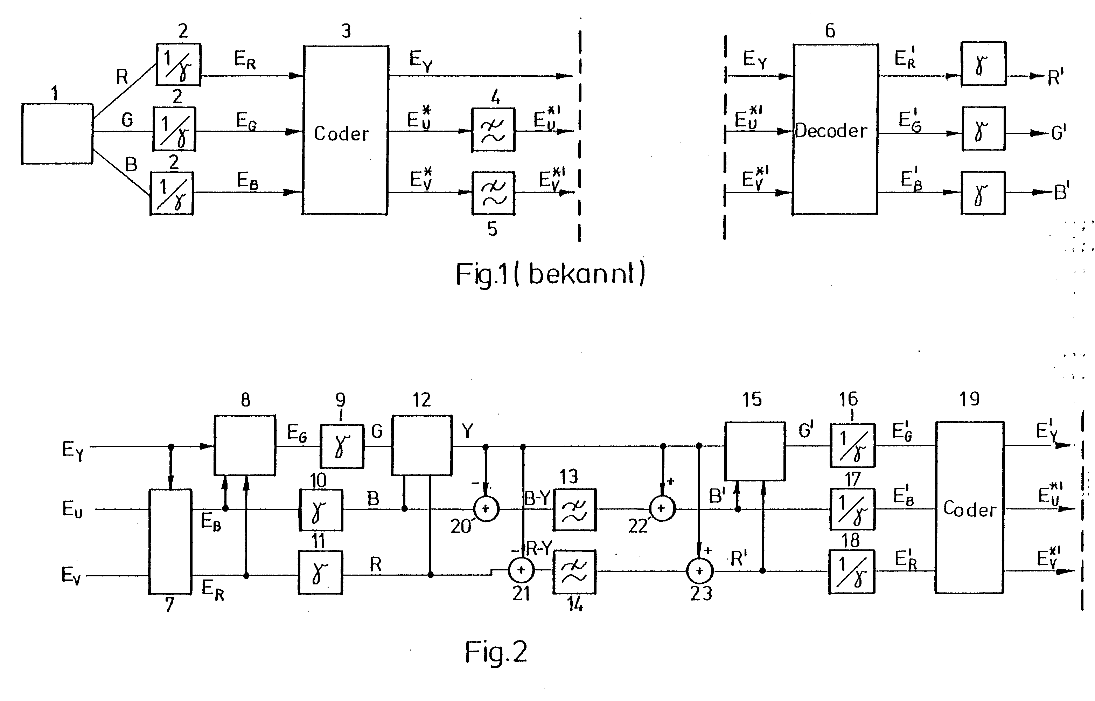

Fig. 2 zeigt das erfindungsgemäße Farbfernsehübertragungssystem. Bei diesem Ausführungsbeispiel liegen das gammavorverzerrte Luminanzsignal $E_Y$ sowie die gammavorverzerrten Chrominanzsignale $E_U$ und $E_V$ vor. Aus diesen Signalen werden in einer Additionsstufe 7 die Chrominanzsignale $E_B$ und $E_R$ für die Blau-und Rotinformation gewonnen. Das Chrominanzsignal $E_G$ für die Grüninformation wird in einer Bewertungsschaltung 8 aus den Signalen $E_Y$, $E_B$ und $E_R$ gewonnen. Die Farbsignale R, G, B werden mittels Gammaverzerrungsstufen 9, 10 und 11 aus diesen Signalen $E_G$, $E_B$ und $R_R$ gewonnen. Liegen die Farbsignale R, B, G wie z.B. bei einer Kamera schon vor, werden diese Aufbereitungsstufen nicht benötigt.

Aus den Farbsignalen R, B und G wird in einer Bewertungsschaltung 12 die Luminanz Y gewonnen. In Subtraktionsstufen 20, 21 werden die Luminanz Y von den Farbsignalen R, B subtrahiert zu den Chrominanzdifferenzsignalen R-Y, B-Y. Die Chrominanzdifferenzsignale R-Y, B-Y werden in Tiefpässen 13, 14 tiefpaßgefiltert und darauffolgend mit der Luminanz Y in Additionsstufen 22, 23 zu den Farbsignalen B' und R' addiert. Die Farbsignale R', B' sowie die Luminanz Y werden einer Bewertungsschaltung 15 zugeführt. In der Bewertungsschaltung 15 wird das Farbsignal G' gewonnen. Die Farbsignale R', G' und B' werden zu den Farbwertsignalen $E'_G$, $E'_B$ und $E'_R$ in Vorverzerrungsstufen 16, 17, 18 gammavorverzerrt und ein-

.em Coder 19 zugeführt. An den Ausgängen des Coders 19 liegen das zu übertragende Luminanzsignal $E'_Y$ und die Chrominanzsignale $E^*_U$ und $E^*_V$ vor.

Wird für die Übertragung der EBU-Standard verwendet, haben die beschriebenen Schaltungsteile folgende mathematische Verknüpfungen:

Additionsstufe 7   $E_B = E_U + E_Y$, $E_R = E_V + E_Y$

Bewertungsschaltung 8   $E_G = (E_Y - 0{,}11 E_B - 0{,}3 E_R)/0{,}59$

Bewertungsschaltung   12
$Y = 0{,}222R + 0{,}707G + 0{,}071B$

Bewertungsschaltung   15   $G' = (Y - 0{,}222R' - 0{,}071B')/0{,}707$

## Ansprüche

1.  Farbfernsehübertragungssystem mit Übertragung von Luminanzsignalen und tiefpaßgefilterten Chrominanzsignalen, dadurch gekennzeichnet, daß zur Vermeidung von Luminanzdefekten bei der Wiedergabe Chrominanzdifferenzsignale (R-Y, B-Y) auf der Übertragungsseite vor einer Gammavorverzerrung tiefpaßgefiltert werden.

2. Farbfernsehübertragungssystem nach Anspruch 1, dadurch gekennzeichnet , daß aus dem gammavorverzerrten Luminanzsignal ($E_Y$) und den gammavorverzerrten Chrominanzsignalen ($E_U$, $E_V$) gammavorverzerrte Farbsignale (R,G,B) erzeugt werden.

3. Farbfernsehübertragungssystem nach Anspruch 2, dadurch gekennzeichnet , daß aus den Farbsignalen (R,G,B) ein Luminanzsignal (Y) und Chrominanzdifferenzsignale (B-Y, R-Y) gewonnen werden.

4. Farbfernsehübertragungssystem nach Anspruch 1 oder 3, dadurch gekennzeichnet, daß die Chrominanzdifferenzsignale (B-Y, R-Y) tiefpaßgefiltert werden.

5. Farbfernsehübertragungssystem nach Anspruch 4, dadurch gekennzeichnet , daß aus den tiefpaßgefilterten Chrominanzdifferenzsignalen (B-Y, R-Y) und der Luminanz (Y) Farbsignale (R',G',B') erzeugt werden.

6. Farbfernsehübertragungssystem nach Anspruch 5, dadurch gekennzeichnet, daß die Farbsignale (R',G',B') gammvorverzerrt und einem Coder (19) zugeführt werden.

0 253 218

**Fig.1 ( bekannt )**

Fig.1:

1 — R, G, B

2: $1/\gamma$ → $E_R$
2: $1/\gamma$ → $E_G$
2: $1/\gamma$ → $E_B$

3: Coder → $E_Y$, $E_U^*$, $E_V^*$

4: $\approx$ → $E_U^{*'}$
5: $\approx$ → $E_V^{*'}$

6: Decoder
$E_Y$, $E_U^{*'}$, $E_V^{*'}$ → $E_R'$, $E_G'$, $E_B'$
$\gamma$ → R'
$\gamma$ → G'
$\gamma$ → B'

**Fig.2**

$E_Y$, $E_U$, $E_V$

7

8 → $E_G$
9: $\gamma$ → G
$E_B$
10: $\gamma$ → B
$E_R$
11: $\gamma$ → R

12 → Y

20: $-$ / $\oplus$ → B-Y
13: $\approx$
21: $-$ / $\oplus$ → R-Y
14: $\approx$

22: $\oplus$ $+$
23: $\oplus$ $+$ → R'

15 → G', B'

16: $1/\gamma$ → $E_G'$
17: $1/\gamma$ → $E_B'$
18: $1/\gamma$ → $E_R'$

19: Coder → $E_Y'$, $E_U^{*'}$, $E_V^{*'}$